# EUROPEAN PATENT SPECIFICATION

(11) **EP 0 883 335 B1**
(45) Date of publication and mention of the grant of the patent: **12.06.2002**
(21) Application number: 97904659.6
(22) Date of filing: 24.02.1997
(51) Int. Cl.: A01G 7/00, A01G 9/02

(54) **METHOD FOR CULTIVATING FLOWER-BEARING AND LEAF-BEARING PLANTS AND TUBULAR ELEMENT TO BE USED THEREWITH**
ZUCHTVERFAHREN FÜR BLUMEN- END BLÄTTERPFLANZEN UND TUBULARES ELEMENT DAFÜR
PROCEDE DE CULTURE DE PLANTES A FLEURS ET A FEUILLES ET ELEMENT TUBULAIRE UTILE A CETTE FIN

(30) Priority: 23.02.1996 NL 1002439
(43) Date of publication of application: 16.12.1998
(73) Proprietor: Van Rijn Groeisystemen B.V., 1424 RD De Kwakel (NL)
(72) Inventor: van Rijn, Hermanus J., * (NL)
(74) Representative: Smulders, Theodorus A.H.J., Ir.
(86) International application number: NL9700083
(87) International publication number: WO9730577

(56) References cited:
- EP-A- 0 145 353
- EP-A- 0 452 217
- EP-A- 0 460 812
- CH-A- 639 241

## Description

The invention relates to a method for cultivating flower-bearing and leaf-bearing plants whose stems and branches generally grow in upward direction, wherein a number of plant parts, such as at least one graft and a number of shoots, are bent laterally as a whole, so that, adjacent the bending location, further shoots originate which form the products to be cultivated, in particular cut flowers, which, after having reached a desired length and development, are cut off. The invention also relates to a tubular element to be used with a cultivating method according to the invention.

In a cultivating method as referred to in the previous paragraph and as known from EP-A1-0 460 812, the plants are preferably disposed in beds row-wise, and the graft (or, if present, the grafts) and a number of shoots, in general the first ground shoots and any other, unsaleable branches, are bent in the direction of and down to the bed, with the bending location being virtually at the place where the plants come out of the ground, i.e. directly above the root system. Generally, in a plant thus treated, no flowers will develop in the laterally bent plant parts, but at and adjacent the bending location shoots are formed that grow in upward direction. The bent plant parts remain leaf-bearing and hence keep assimilating, with the sugars thus formed being passed on to the newly formed shoots which, as a result, grow extremely prosperously and start forming luxuriant flowers.

The object of the invention is to further improve and optimize the above-described cultivating method.

Further objects of the invention are to improve the working circumstances for the nursery man and to create conditions for working in a more environmentally friendly manner.

In accordance with the invention, this is realized in that each plant is disposed in a separate tubular element that is over the larger part of its length surrounded by free space and filled with cultivating soil or cultivating substrate, such as, inter alia, coco substance or lava granules, each tubular element being spaced from further tubular elements and constructed with a length/diameter ratio such that the bent plant parts are bent downwardly through an angle greater than 90° with respect to a horizontal plane and project, over the larger part of their lengths, beyond and under at least the top part of the circumferential wall of the tubular element in the free space surrounding it.

Through these measures, the bent plant parts will be freely suspended in space, unlike the known method, where those plant parts are located on or directly above the bed. It has appeared that the bent, freely suspending plant parts remain leaf-bearing considerably better than plant parts that contact the bed or are located directly thereabove. By virtue of more and healthier leaves on the bent, freely suspending plant parts, the assimilation process and, accordingly, the growth process of the newly formed shoots and the flower bud development in those shoots are promoted. In addition, the assimilation process is further promoted in that the air can circulate around the freely suspending, bent plant parts in a much better and easier manner. Thus, a two-part plant with effectively separated functions is obtained, at it were: on the one hand a downwardly suspending, bent nutrient part where optimum conditions for the assimilation process are created, and on the other an upwardly extending production part where optimum conditions for growth, bud form, and harvesting are created.

Hence, the result of the measures proposed in accordance with the invention is both a higher yield per plant and a highly improved quality compared with the presently known cultivating methods.

Owing to the fact that the bent plant parts are suspended in the free space, in accordance with a further embodiment of the invention, it is possible that the bent plant parts are bent into a relatively steep to vertically depending position, i.e. a bending angle of 135° or more. With plant parts bent in this manner, the surface area occupied by a plant in top plan view can be utilized more profitably. It is then also promoted that the plant can develop optimally and hence grow larger and more massive. In this connection, in accordance with a further embodiment of the invention, it is further preferred that a number of tubular elements be spaced apart so that the bent plant parts of one plant can hardly touch, if at all, those of another plant. Thus, all the plants are not only conveniently grouped and can be surveyed and treated individually, but, if necessary, each plant can also be removed and replaced by another without influencing the other plants.

Through the use of the tubular elements, which preferably have a length at least equal to the maximum length of the bent plant parts, the plant is as it were elevated. This has the additional advantage that the plant thereby automatically takes up a higher position and hence becomes accessible to the nursery man without stooping low, in other words: it assumes a more proper working height. Thus, not only can the plant parts to be harvested be reached in a quick and simple manner by elevating the plant and bending the other plant parts away and downwards, but the plant is also arranged more conveniently for the other operations to be performed.

The tubular element can be disposed on or partially in a bed, with the length of the tubular element above the bed being so that the downwardly bent plant parts remain clear of the bed. However, in accordance with a further embodiment of the invention, it is preferred that each tubular element has its bottom side provided with a closure and that, in or adjacent that closure, drain openings be provided, with a number of such tubular elements being disposed above a water discharge gutter. Through these measures, a number of additional, yet significant advantages can be realized. A water or waste water surplus can be centrally collected and discharged in a particularly environmentally friendly manner, so that the pollutions present therein can be separated efficiently, which considerably increases the guarantee that the harmful substances do not end up in the environment. Further, by disposing the tubular elements above the gutter, and more in particular by creating an open space between the closure of the tubular element with its discharge openings and the bottom of the gutter, a root stop can effectively be obtained, because roots which from a dark, moist environment end up in a light, relatively dry environment, stop growing. In this connection, it is additionally observed that the drain openings prevent root rot. In this manner, a healthy lower end of the root system can be obtained, which remains entirely within the tubular element. This last has the further advantage that the root system of one plant remains entirely out of contact with that of another plant, so that contact infections between the plants are prevented. Further, the closing of the tubular element and its arrangement above a gutter, which may also have the form of a discharge pipe or a container or bucket, optionally provided with a drain possibility, further has the advantage that a or a number of plants can readily be removed and replaced by new and/or other plants, for instance in the case of diseased plants, or improperly or irregularly growing plants.

The closing of the tubular element can be effected by squeezing that element close at the bottom side thereof; however, the provision of a bottom plate will be preferred. In order to dispose such elements above a gutter, in accordance with a further embodiment of the invention, it is preferred that each tubular element be provided with foot means and that a number of such tubular elements be disposed on a discharge gutter so as to supported thereby. If the foot means extend beyond the bottom side of the tubular element, the enlargement of the open space under the tubular element further improves the occurrence of the root-stop effect and the advantages obtained thereby, as discussed hereinabove.

In accordance with a further embodiment of the invention, it is also possible that a number of tubular elements are suspended above a discharge gutter. In this connection, for instance heating pipes could serve as suspension means.

The invention further relates to a tubular element to be used with a method as discussed hereinabove. The tubular element can be manufactured from any suitable material of a certain inherent stiffness, for instance from plastic, ceramics, metal, concrete, glass, and the like. Further, the tubular form can have any desired cross section, which can moreover vary over the height of the tubular element, for instance circular at one end and polygonal at the other end. As mentioned, it is particularly preferred that the bent plant parts do not contact the bed, any different type of bottom or a discharge gutter, in order that the bent plant parts are freely suspended as much as possible. To promote this effect, hence to keep as much foliage as possible, in the healthiest possible condition, on the bent plant parts, it is further preferred that those plant parts be released from the tubular element as quickly as possible, i.e. the circumference of the tubular element in the upper area is kept as small as possible. Starting from a tubular element as e.g. known from CH-A-639 241, in accordance with the invention, it is preferred that the tubular element has a diverging shape with a lower end and an upper end, the lower end having a larger cross-section than the upper end, whereas the length of the tubular element be at least twice the transverse dimension of the tubular element adjacent its upper end, or the smallest transverse dimension if the tubular element has an elongated cross section. Considering the manner of growth of most plants, in accordance with a further preferred embodiment of the invention, it is preferred that the tubular element has a circular cross section at least in its upper area.

When the upper edge area of the tubular element is kept as small as possible, it will be possible that the top face of that element is virtually entirely occupied by plant parts coming out of the ground or another nutrient substrate. Hence, in accordance with a further embodiment of the invention, it is preferred that in the upper end area of the side wall, one or a number of irrigation and soil aeration holes be provided. Thus, the watering and feeding of a plant can be controlled in an optimum manner.

To prevent damages to the bent plant parts, it is further preferred that the upper edge of the tubular element be of a rounded or beaded design.

As mentioned above, the tubular element can be stuck into a bed. This is preferably a locally limited bed, i.e. the tubular element extends over a part of its length into a pot-shaped container filled with cultivating soil or another nutrient substrate, while it is then preferably provided that means be present for securing the tubular element in the pot-shaped container. The securing means can be constructed in many ways. It is for instance possible that the securing means consist of ribs attached to the outside of the tubular element and/or the inside of the pot-shaped container. Another possibility is that the securing means consist of a cover to be fixed on the pot-shaped container, which cover is provided with pass and/or securing means for the tubular element. It is also possible that the tubular element is disposed on that bed or disposed above that bed, a discharge gutter or another bottom. When the tubular element is being stuck into the bed, it may be open at its bottom side. However, it is also possible, and for arrangement above the bed it is preferred, that the tubular element has its lower end provided with a closure. This closure can be realized in many ways. For instance, the lower end of the tubular element can be deformed into a more or less closing form. Likewise, it is possible to close the bottom side with a plate-shaped or cover-shaped part which may or may not be detachable. In the case where the tubular element has its lower end provided with a closure, it is preferred, inter alia to prevent root rot, that drain openings be provided in or adjacent the lower end of the tubular element. Depending on the size of the drain openings, soil and/or root turning means can further be provided in the tubular element, if so desired.

Depending on the shape the tubular element could have stabilization problems. To be able to overcome such problems, in accordance with a further embodiment of the invention, it is proposed that the outside of the tubular element be provided with stabilization means, such as, for instance, fin-shaped projecting parts, which may have many shapes. For sticking a tubular element into a bed, those stabilization means can for instance have the shape of vertically arranged, triangular fins, with an angular point forming the lower end of the stabilization means. It is thus provided that the tubular element can be pressed or driven into the bed relatively easily, while a stable, upright tubular element is nevertheless obtained.

If the tubular element is to be disposed on or above the bed, a discharge gutter or another bottom, in accordance with a further embodiment of the invention, it is preferred that the stabilization means comprise means forming a foot. These means, too, can have the shape of triangular, fin-shaped projections, although for obtaining a bottom support face, the point of the triangle is now upwardly directed. Further, the fins can be connected to a bottom support plate, while it is of course also possible that a bottom support plate is present that is larger relative to the tubular element and without fin-shaped projections. When it is for instance of concrete construction, that bottom-support plate may form part of a block.

To promote the root-stop effect and the controlled drain and water discharge possibilities, in accordance with a further embodiment of the invention, it is preferred that the means forming a foot extend beyond the lower end of the tubular element.

The tubular element according to the invention has a lower end with a larger cross section than the upper end, which should be kept as small as possible. This can for instance be realized by giving the tubular element a stepped construction. In accordance with a further embodiment of the invention, however, it is preferred that the tubular element be of conical design, diverging from top to bottom. For particular plants, this embodiment further has the advantage that in spite of a small top face, a large volume is available for the root system of the plant. If, in particular cases, it were necessary to remove the plant from the tubular element, that tubular element can be of divisible design, for instance by being composed of two shell halves.

A particular preference is had for an embodiment from which, in practice, optimum results are expected in various respects and wherein the tubular element comprises a conical tube part diverging from top to bottom and a cover-shaped bottom part, wherein the tube part is provided, in its lower area, with a number of circumferentially distributed ribs extending substantially vertically and projecting under the lower edge of the tube part, and, at its lower edge, with a number of circumferentially distributed flange parts extending substantially horizontally and projecting outwards from the outer surface of the tube part, and wherein the bottom part comprises a plate-shaped part and a circumferential edge extending upwards from that part, which circumferential edge is its free upper edge provided with a number of circumferentially distributed projections extending substantially horizontally and projecting inwards from the inner surface of the circumferential edge, the arrangement being such that the bottom part can be fixedly clamped on the tube part through cooperation of the flange parts and the projections, with the ribs resting against the plate-shaped part, so that, when the bottom part is clamped on the tube part, an open gap remains between tube part and bottom part. Through these measures, a tubular element can be obtained that can be manufactured in a relatively simple manner and that has optimal possibilities for bending plant parts through more than 90°, wherein that tubular element is originally particularly stable and is easy to displace and group or regroup, while there is also provided a root growth stop.

If a number of circumferentially distributed openings are provided in the bottom part, at the transition between the plate-shaped part and the circumferential edge, a suitable drainage is readily provided. In this connection, the manufacture of the bottom part, which is effected through injection molding, can be simplified if the openings are provided below the projections. In that case, the inwardly extending projections do not cause any relief problems during the manufacture of the bottom part in an injection mold.

To realize the clamping connection between tube part and bottom part in a quick, simple and reliable manner, it is further proposed that the flange parts be provided with a locating edge part, a clamping part and a stop part.

If the tube part further is provided, in its upper area, with valve means which form part of the tube part and can be pivotally pressed inwards or outwards relative to the circumferential wall thereof, there is provided a possibility of providing, if so desired, a watering possibility below the top face, which can for instance be entirely occupied by a plant.

To prevent a number of tube parts from wedging rigidly in one another during transport or storage, it is preferred that the tube part be internally provided, in its upper area, with a number of circumferentially distributed ribs which extend substantially radially and vertically and which are dimensioned so that when a number of tubular elements are nested, the upper edge of a subjacent tubular element butts against the bottom sides of the ribs of a superjacent tubular element before the tubular elements can clampingy wedge in one another.

The ability to displace the tubular element in a simple and quick manner can further be promoted if the tube part has its outside provided with handgrip means.

Hereinafter, the method according to the invention and the tubular elements to be used therewith will be specified, with reference to exemplary embodiments shown in the accompanying drawings. In these drawings:
Fig. 1 shows a first embodiment of a tubular element with a plant cultivated therein according to the invention;
Fig. 2 shows a second embodiment of a tubular element downwardly diverging according to the invention, disposed in a receptacle;
Fig. 3 shows a section taken on line III-III in Fig. 2;
Fig. 4 shows a third embodiment of a tubular element to be used in the method according to the invention, disposed in a container having a cover;
Fig. 5 shows a fourth embodiment of a tubular element to be used in the method according to the invention, suspended above a discharge gutter;
Fig. 6 shows a fifth embodiment of a tubular element to be used in the method according to the invention, to be disposed in a container;
Fig. 7 shows a sixth embodiment of a tubular element downwardly diverging according to the invention;
Fig. 8 shows a seventh embodiment of a tubular element to be used in the method according to the invention;
Fig. 9 shows an eighth embodiment of a tubular element to be used in the method according to the invention;
Fig. 10 shows a ninth embodiment of a tubular element to be used in the method according to the invention, disposed on a discharge gutter;
Fig. 11 shows a tenth embodiment of a tubular element to be used in the method according to the invention, disposed on a discharge gutter;
Fig. 12 shows, partly in elevation and partly in section, an eleventh embodiment of a tubular element downwardly diverging according to the invention;
Fig. 13 shows a section taken on the line A-A in Fig. 12; and
Fig. 14 shows in cross section a detail of the eleventh embodiment, to an enlarged scale.

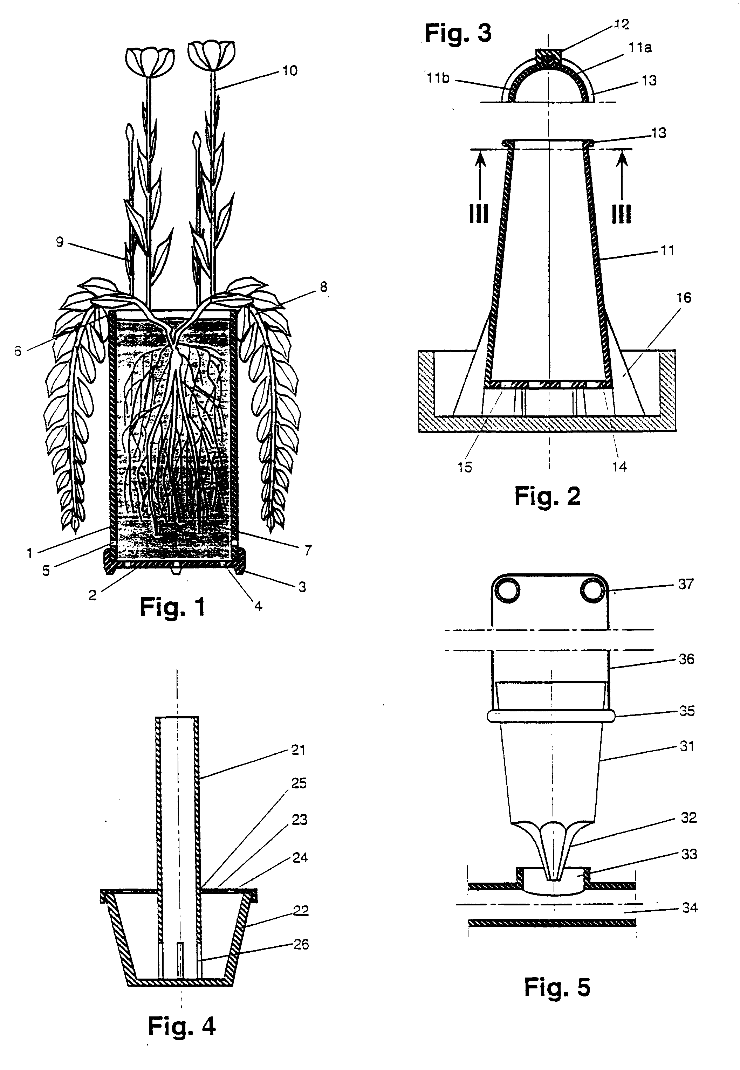

Fig. 1 shows a tubular element 1 consisting of a cylindrical sleeve part having a constant circular cross section. The sleeve part 1 is at its bottom side closed by a cover 2 having four projections 3 that serve as legs, so that the cover 2 and, accordingly, the tubular element 1, are substantially free from a positioning face not shown in Fig. 1. The cover 2 is further provided with drain openings 4. Similar drain openings 5 are provided in the tubular element 1. Further, the tubular element 1 is open at the top and provided, at that location, with a rounded upper edge 6. The tubular element 1 is virtually entirely filled with cultivating soil 7 or another cultivating substrate, such as, for instance, cocos substance or lava granules.

The tubular element 1 and the cover 2 are manufactured from plastic. However, this material could as well have been any other suitable material, such as concrete, ceramics, glass, metal, and the like. It is presently observed that the same applies to the embodiments of the tubular element to be discussed hereinbelow. Likewise, all those embodiments can have, apart from the circular form mentioned, any desired cross section, such as square, rectangular, polygonal, oval, etc.

Disposed in the tubular element 1 filled with cultivating soil 7 is a plant whose plant parts 8, such as a graft, a first ground shoot and, possibly, an unsaleable branch, are bent away aside and downwards. The diameter of the tubular element 1 is chosen so that the bent plant parts 8 extend outside the rounded upper edge 6 and hence into the free space around the tubular element 1 as quickly as possible. Thus, those bent plant parts 8 will be optimally leaf-bearing, so that extremely advantageous assimilation conditions are created, which are moreover further promoted in that the air can surround and pass over the leaves on all sides. To keep these conditions optimal, the height of the tubular element 1 should be chosen so that the bent plant parts 8 always remain suspended in the free space, i.e. they hardly contact, if at all, the positioning face of the tubular element 1. The sugars produced during the assimilation process are passed on to the newly formed shoots 9, formed near the location where the plant comes out of the cultivating soil, i.e. substantially from the heart of the plant and the first bending area of the bent plant parts 8. In this manner, optimum growth conditions are created for the shoots 9 growing straight upwards, so that these shoots will grow relatively quickly and will be luxuriantly flower-bearing. The thus cultivated cut flowers 10 are harvested and sold at the desired point of time.

Fig. 2 shows a tubular element 11 whose cross section increases in downward direction. Thus, with a minimum top surface and hence maximally freely suspending, bent plant parts, a relatively large root-growth volume can be obtained. If the plant should be able to be removed from the tubular element 11 without damages, the tubular element 11 can be manufactured from two shells 11a and 11b, each having a flanged edge at the interface, while two adjoining flanged edges can be fixed one against the other by means of a clamping element 12, as shown in Fig. 3. Further, the tubular element 11 has its upper edge provided with a beaded edge 13, preventing damages to the bent plant parts. At the bottom side, the tubular element 11 is closed by a bottom 14 having drain openings 15. To enable the tubular element 11 to be detached from the plant, the bottom 14 is detachably connected to the tubular element 11 in a manner not shown. This tubular element 11 further has its outside provided with a number of projecting fins 16 projecting under the bottom 14 through a certain distance. In this manner, legs are provided that keep the bottom 14 free from the positioning face, which in this embodiment consists of the bottom of a container 17, which, if so desired, can be connected to a drain system.

Fig. 4 shows a tubular element 21 disposed in a pot-shaped container 22 which can at least partly be filled with cultivating soil and which is closed by a cover 23 provided with soil aeration and soil irrigation holes 24. The tubular element 21 rests on the bottom of the pot-shaped container 22 and is further held in position by a central opening 25 in the cover 24, which opening 25 is adjusted to the section of the tubular element 21. At its lower-end area, the tubular element 21 is further provided with slot-shaped openings 26 whereby the interior of the tubular element 21 is in connection with the interior of the pot-shaped container 22. These slot-shaped openings 26 serve as root holes and can also be of a different design, for instance round.

Fig. 5 shows a tubular element 31 having a configuration which slightly tapers from its upper edge in downward direction. The lower end of the tubular element 31 is inwardly deformed into a nozzle-shaped end 32 extending into an opening 33 of a drain pipe 34. In its upper area, the tubular element 31 comprises a ring 35 extending around its circumference and serving to attach thereto a wire 36 for bringing the tubular element 31 in suspended position, as the wire 36 passes over, for instance, heating pipes 37.

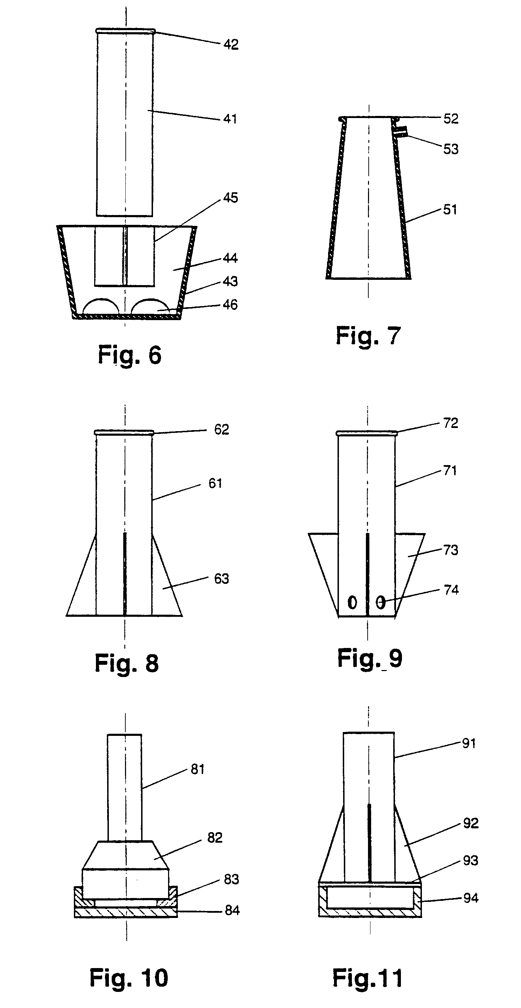

Fig. 6 shows a tubular element 41 having a flanged upper edge 42 above a pot-shaped container 43, internally provided with cross-shaped ribs 44 wherein recesses 45 are provided for receiving the tubular element 41. The recesses 45 are dimensioned so that a tubular element 41 inserted therein assumes a stable position. Further, recesses 46 are provided in the fins 44, so that the four compartments of the pot-shaped container 43 are in mutual contact. If so desired, the pot-shaped container 43 can further comprise drain provisions.

Fig. 7 shows a tubular element 51 having a beaded upper edge 52, which can be disposed directly in or on a bed of cultivating soil or another cultivating substrate. From the upper edge 52, the tubular element 51 has a tapering shape for realizing a smallest possible top face. This last may mean that a plant occupies the top face completely or almost completely. For irrigating and feeding the plant, use can then be made of a nozzle 53 located directly below the beaded upper edge 52. If the tubular element 51 is partly stuck into a bed, root hole bores can further be provided in that part sticking into the bed, if so desired.

Fig. 8 shows a tubular element 61 having a flanged upper edge 62 and having its lower end area provided with quadrangular stabilization fins 63 whereby the tubular element 61 can be stably positioned on a bed or another surface.

Fig. 9 shows a tubular element 71 having a flanged upper edge 72 and having its lower end area provided with triangular stabilization fins 73, whose points are downwardly directed. This renders the tubular element 71 particularly suitable for being stuck or driven into a bed of cultivating soil, with the fins 73 readily penetrating into the soil and providing that the tubular element 71 remains in position in a stable manner. Further provided between the fins 73 are a number of root holes 74.

Fig. 10 shows a tubular element 81, secured in a concrete base 82 supported by two L-shaped sections, which, in turn, rest on a bottom plate 84. As Fig. 10 demonstrates, the parts 83 and 84 together form a discharge gutter, with the bottom of the base 82 that supports the tubular element 81 being located at a distance above the top face of the bottom place 84. Although not shown, it will be appreciated that the tubular element 81 and the base 82 are provided with openings through which waste water can find its way into the discharge gutter.

Fig. 11 shows a tubular element 91 having its lower area provided with supporting ribs 92. The lower ends of the tubular element 91 and the ribs 92 are in the same plane and connect at that location to a bottom plate 93 resting on the upright side edges of a U-shaped discharge gutter 94. For draining purposes, the bottom plate 93 is provided, in the area closing the tubular element 91, with openings, not shown in the drawing. In the case of a circular or square cross section of the tubular element 91, to obtain a maximally stable positioning of the tubular element 91, the bottom plate 93 will have a square shape of such dimensions that two opposite side edges rest throughout their lengths on the upper edges of the discharge gutter 94.

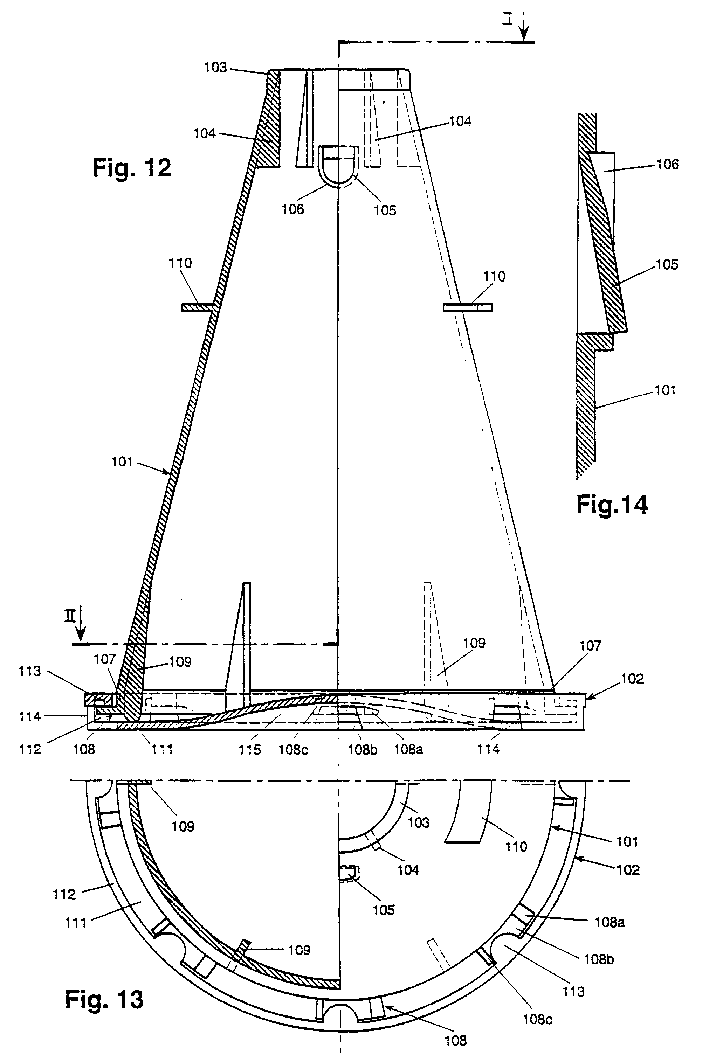

Figs. 12-14 show an embodiment which is expected to yield optimum results, in practice. The tubular element is composed of a relatively thin-walled, hollow tube part 101 having a conical shape diverging from top to bottom, and a cover-shaped bottom part 102.

The tube part 101 has a rounded upper edge 103, outwardly slightly thickened. Further, the tube part 101 comprises in its upper area six radially inwardly extending ribs 104, which are evenly distributed over the inner circumference and which all have the shape of a right-angled triangle, wherein one cathetus extends vertically and has the end opposite the right angle connecting to the inside of the upper edge 103, and the other cathetus points radially inwards. Also provided in the upper area of the tube part is a valve member 105, shown to an enlarged scale, in cross section, in Fig. 14. The valve member 15 is formed from the wall material of the tube part 101 through the provision of a substantially U-shaped cut, the lower part of the cut-loose U-shaped part having a thickness substantially equal to that of the wall of the tube part 101 and the upper part becoming thinner in upward direction, so that the cut-loose U-shaped part can pivot about its upper edge, as indicated in Fig. 14. At the location of the U-shaped cut, the wall of the tube part 101 is reinforced by means of a U-shaped rib 106. At its lower end, the tube part 101 comprises a cylindrical edge 107 having on its lower end eight flanges 108, evenly distributed over the circumference so as to extend outwards substantially horizontally. Each flange 108 comprises a locating edge part 108a, a clamping part 108b and a stop part 108c. Further, in the lower area of the tube part 101, six radially inwardly extending ribs 109 are provided on the inner wall thereof, which ribs extend beyond the lower end of the cylindrical edge 107 and the bottom face of the flanges 108 to form a number of legs which keep the lower circumferential edge of the tube part 101 spaced from a positioning face. Finally, the tube part 101 further has its outer surface provided with two handgrips 110.

The bottom part 102 substantially consists of a cover-shaped part comprising a circular bottom plate 111 and a circumferential edge 112 perpendicular thereto, along the top side of which eight inwardly extending projections 113 are provided, evenly distributed over the circumference. The inside diameter of the circumferential edge 112 and the free distance between two projections 113 is chosen so that when the tube part 101 is disposed on the bottom part 102, the eight flanges 108 of the tube part 101 can each move downwards between two projections 113 until the lower ends of the ribs 109 contact the bottom plate 111, the respective dimensions being chosen so that the bottom sides of the projections 113 are located slightly below the top faces of the clamping parts 108b. By rotating the bottom part 102 relative to the tube part 101 in a suitable manner, clockwise in Fig. 13, the bottom sides of the projections 113 will run against the top faces of the locating edge parts 108a, whereupon further rotation of the bottom part 101 until the projections 113 butt against the stop parts 108c through cooperation of the clamping parts 108b and the projections 113 results in a clamping connection between the tube part 101 and the bottom part 102, with an open passage remaining between the two parts, which open passage hence acts as root-growth stop. Further, at the location of each projection 113, a water discharge opening 114 is present in the bottom part 102. The provision of those openings 114 at the location of the projections 114 facilitates the manufacture of the bottom part 102, in terms of injection molding engineering. For reasons of strength and stiffness, the central area of the bottom plate 111 is depressed inwardly, and at the location of that depression, a radial rib 115 is provided.

After the foregoing, the functions of the flanges 108, the ribs 109 and the projections 113 will be understood. The same will apply to the handgrips 110. The clamping member 105, of which several may be present, if necessary, can be used for an irrigation provision. Finally, the ribs 104 prevent clamping parts 101 from wedging tightly in one another when a number of those tube parts 101 are nested, for instance during transport or storage. Further, for nesting a number of tube parts 101, the handgrips 110 and the ribs 109 can be suitably dimensioned.

It is readily understood that within the framework of the invention as laid down in the appended claims, many further modifications and variations are possible. For instance, in the embodiments wherein tubular elements in the form of straight cylinders are shown, tapering or diverging tubular forms can be used as well, and the other way round although according to the invention downwardly diverging tubular elements are preferred. Non-straight tubular elements may also have a bent or stepped, staggered surface. The optimal form can in each case be determined on the basis of the manner of growth of the plant and root system. Further, if necessary, the tubular elements can be provided with a light-reflecting layer whenever this could further promote the growth process.

## Claims

1. A method for cultivating flower-bearing and leaf-bearing plants whose stems and branches generally grow in upward direction, wherein a number of plant parts (8), such as at least one graft and a number of shoots, are bent laterally as a whole, so that, adjacent the bending location, further shoots (9) originate which form the products to be cultivated, in particular cut flowers (10), which, after having reached a desired length and development, are cut off, **characterized in that** each plant is disposed in a separate tubular element (1; 11; 21; 31; 41; 51; 61; 71; 81; 91; 101) that is over the larger part of its length surrounded by free space and filled with cultivating soil (7) or cultivating substrate, such as, inter alia, coco substance or lava granules, each tubular element being spaced from further tubular elements and constructed with a length/diameter ratio such that the bent plant parts (8) are bent downwardly through an angle greater than 90° with respect to a horizontal plane and project, over the larger part of their lengths, beyond and under at least the top part of the circumferential wall of the tubular element in the free space surrounding it.

2. A method according to claim 1, **characterized in that** the bent plant parts (8) are bent into a relatively steep to vertically position, i.e. a bending angle of 135° or more.

3. A method according to claim 1 or 2, **characterized in that** a number of tubular elements (1; 11; 21; 31; 41; 51; 61; 71; 81; 91; 101) are spaced apart so that the bent plant parts (8) of one plant hardly touch, if at all, those parts of another plant.

4. A method according to any one of the preceding claims, **characterized in that** each tubular element (1; 11; 21; 41; 51; 61; 71; 81; 91; 101) has its bottom side provided with a closure (2; 14; 32; 93; 102) and that, in or adjacent said closure, drain openings (4, 5; 15; 26; 74; 114) are provided, with a number of such tubular elements being disposed above a water discharge gutter (83, 84; 94).

5. A method according to any one of the preceding claims, **characterized in that** each tubular element (1; 11; 21; 41; 51; 61; 71; 81; 91; 101) is provided with foot means (16; 63; 73; 82; 920 and that a number of such tubular elements are disposed on a discharge gutter (83, 84; 94) so as to supported thereby.

6. A method according to any one of claims 1-4, **characterized in that** a number of tubular elements (31) are suspended above a discharge gutter (34).

7. A tubular element to be used in a method for cultivating flower-bearing and leaf-bearing plants according to any one of the preceding claims, **characterized in that** the tubular element (11; 51; 101) has a diverging shape with a lower end and an upper end, the lower end having a larger cross-section than the upper end, whereas the length of the tubular element is at least twice the transverse dimension of the tubular element adjacent its upper end, or the smallest transverse dimension if the tubular element has an elongated cross section.

8. A tubular element according to claim 7, **characterized in that** it has a circular cross section at least in its upper area.

9. A tubular element according to claim 7 or 8, **characterized in that** in the upper end area of the side wall, one or a number of irrigation and soil aeration holes (53; 105) are provided.

10. A tubular element according to any one of claims 7-9, **characterized in that** its upper edge (13; 52; 103) is of a rounded or beaded design.

11. A tubular element according to any one of claims 7-10, **characterized in that** the tubular element (11; 101) extends over a part of its length into a pot-shaped container (17; 102) filled with cultivating soil or another nutrient substrate.

12. A tubular element according to claim 11, **characterized in that** means (16; 108, 113) are present for securing the tubular element (11; 101) in the pot-shaped container (17; 102).

13. A tubular element according to claim 12, **characterized in that** the securing means (16; 108, 113) consist of ribs attached to the outside of the tubular element (11; 101) and/or the inside of the pot-shaped container (17; 102).

14. A tubular element according to claim 12 or 13, **characterized in that** the securing means consist of a cover to be fixed on the pot-shaped container, said cover being provided with pass and/or securing means for the tubular element.

15. A tubular element according to any one of claims 7-14, **characterized in that** the tubular element (11; 101) is provided with a closure (14; 102) at its lower end.

16. A tubular element according to any one of claims 7-15, **characterized in that** drain openings (15; 114) are provided in or adjacent the lower end of the tubular element (11; 101).

17. A tubular element according to any one of claims 7-16, **characterized in that** the outside of the tubular element (11) is provided with stabilization means (16).

18. A tubular element according to claim 17, **characterized in that** the stabilization means (16) comprise means forming a foot.

19. A tubular element according to claim 18, **characterized in that** the means (16) forming a foot extend beyond the lower end of the tubular element (11).

20. A tubular element according to any one of claims 7-19, **characterized in that** the tubular element (11; 51; 101) is of conical design, diverging from top to bottom.

21. A tubular element according to claim 7, **characterized in that** a conical tube part (101) is provided, diverging from top to bottom, and a cover-shaped bottom part (102), wherein the tube part is provided, in its lower area, with a number of circumferentially distributed ribs (109) extending substantially vertically and projecting beyond the lower edge of the tube part, and, at its lower edge, with a number of circumferentially distributed flange parts (108) extending substantially horizontally and projecting outwards from the outer surface of the tube part, and wherein the bottom part comprises a plate-shaped part (111) and a circumferential edge (112) extending upwards from that part, which circumferential edge is its free upper edge provided with a number of circumferentially distributed projections (113) extending substantially horizontally and projecting inwards from the inner surface of the circumferential edge, the arrangement being such that the bottom part (102) can be fixedly clamped on the tube part (101) through cooperation of the flange parts (108) and the projections (113), with the ribs (109) resting against the plate-shaped part (111), so that, when the bottom part is clamped on the tube part, an open gap remains between tube part and bottom part.

22. A tubular element according to claim 21, **characterized in that** a number of circumferentially distributed openings (114) are provided in the bottom part (102), at the transition between the plate-shaped part (111) and the circumferential edge (112).

23. A tubular element according to claim 22, **characterized in that** the openings (114) are provided below the projections (113).

24. A tubular element according to claim 21, **characterized in that** the flange parts (108) are provided with a locating edge part (108a), a clamping part (108b) and a stop part (108c).

25. A tubular element according to claim 21, **characterized in that** the tube part (101) is provided, in its upper area, with valve means (105) which form part of the tube part and can be pivotally pressed inwards or outwards relative to the circumferential wall thereof.

26. A tubular element according to claim 21, **characterized in that** the tube part (101) is internally provided, in its upper area, with a number of circumferentially distributed ribs (104) which extend substantially radially and vertically and which are dimensioned so that when a number of tubular elements are nested, the upper edge (103) of a subjacent tubular element butts against the bottom sides of the ribs of a superjacent tubular element before the tubular elements can clampingy wedge in one another.

27. A tubular element according to claim 26, **characterized in that** the tube part (101) has its outside provided with handgrip means (110).

## Patentansprüche

1. Verfahren zum Züchten von Blumen- und Blattpflanzen, deren Stängel und Zweige im wesentlichen nach oben wachsen, wobei etliche Pflanzentelle (8), wie z. B. mindestens ein Pröpfling und eine Anzahl von Sprösslingen, als Ganzes zur Seite gebogen sind, so dass angrenzend an die Biegestelle weitere Sprösslinge (9) entstehen, die die zu züchtenden Produkte bilden, und zwar insbesondere Schnittblumen (10), die nach Erreichen einer gewünschten Länge und eines gewünschten Entwicklungszustands abgeschnitten werden,
**dadurch gekennzeichnet, dass** jede Pflanze in einem separaten rohrförmigen Element (1;11;21;31;41;51;61;71;81;91;101) angeordnet ist, das über den größeren Teil seiner Länge von einem Frelraum umgeben und mit Zuchterde (7) oder Zuchtsubstrat gefüllt ist, u. a, mit Kokossubstanz oder Lavagranulat, wobei jedes rohrförmige Element von weiteren rohrförmigen Elementen beabstandet ist und ein solches Längen/Durchmesser-Verhäitnis aufweist, dass die gebogenen Pflanzenteile (8) um einen Winkel von mehr als 90° relativ zu einer horizontalen Ebene nach unten gebogen sind und über den größeren Teil ihrer Länge über den und unter dem zumindesten oberen Teil der umlaufenden Wand des rohrförmigen Elements in den dieses umgebenden Freiraum vorstehen,

2. Verfahren nach Anspruch 1, **dadurch gekennzeichnet, dass** die gebogenen Pflanzenteile (8) in eine relativ steile bis vertikale Position gebogen sind, d. h, in einem Biegewinkel von 135° oder mehr.

3. Verfahren nach Anspruch 1 oder 2, **dadurch gekennzeichnet, dass** eine Anzahl von rohrförmigen Elementen (1;11;21;31;41;51;61;71;81;91; 101) voneinander beabstandet angeordnet sind, so dass die gebogenen Pflanzenteile (8) einer Pflanze diese Teile einer anderen Pflanze kaum, wenn überhaupt, berühren.

4. Verfahren nach einem der vorhergehenden Ansprüche, **dadurch gekennzeichnet, dass** jedes rohrförmige Element (1;11;21;31;41;51;61; 71;81;91;101) auf seiner Unterseite mit einem Verschlussteil (2;14;32; 93;102) versehen ist und dass in dem oder angrenzend an das Verschlussteil Entwässerungsöffnungen (4,5;15;26;74;114) vorgesehen sind, wobei eine Anzahl solcher rohrförmlgen Elemente über einer Wasserablaufrinne (83,84;94) angeordnet ist.

5. Verfahren nach einem der vorhergehenden Ansprüche, **dadurch gekennzeichnet, dass** jedes rohrförmige Element (1;11;21;41;51;61; 71;81;91;101) mit einer Fußeinrichtung (16;63;73;82;92) versehen ist und dass eine Anzahl solcher rohrförmigen Elemente auf einer Ablaufrinne (83,84;94) angeordnet sind, von der sie getragen werden.

6. Verfahren nach einem der Ansprüche 1-4, **dadurch gekennzeichnet, dass** eine Anzahl von rohrförmigen Elementen (31) über einer Ablaufrinne (34) aufgehängt ist.

7. Rohrförmiges Element zur Verwendung in einem Verfahren zum Züchten von Blumen- und Blattpflanzen nach einem der vorhergehenden Ansprüche, **dadurch gekennzeichnet, dass** das rohrförmige Element (11;51;101) eine divergierende Form mit einem unteren Ende und einem oberen Ende aufweist, wobei das untere Ende einen größeren Querschnitt hat als das obere Ende, während die Länge des rohrförmigen Elements mindestens zweimal so groß ist wie die an das obere Ende angrenzende Querabmessung des rohrförmigen Elements oder die kleinste Querabmessung, wenn das rohrförmige Element einen langgestreckten Querschnitt hat.

8. Rohrförmiges Element nach Anspruch 7, **dadurch gekennzeichnet, dass** es mindestens in seinem oberen Bereich einen kreisförmigen Querschnitt aufweist.

9. Rohrförmiges Element nach Anspruch 7 oder 8, **dadurch gekennzeichnet, dass** in dem oberen Endbereich der Seitenwand ein oder eine Anzahl von Bewässerungs- und Erdbelüftungslöchern (53;105) vorgesehen sind.

10. Rohrförmiges Element nach einem der Ansprüche 7-9, **dadurch gekennzeichnet, dass** sein oberer Rand (13;52;103) eine abgerundete oder wulstförmige Konfiguration aufweist.

11. Rohrförmiges Element nach einem der Ansprüche 7-10, **dadurch gekennzeichnet, dass** sich das rohrförmige Element (11;101) über einen Teil seiner Länge in einen mit Zuchterde oder einem anderen Nährsubstrat gefüllten topfförmigen Behälter (17;102) erstreckt.

12. Rohrförmiges Element nach Anspruch 11, **dadurch gekennzeichnet, dass** eine Einrichtung (16;108;113) zum Befestigen des rohrförmigen Elements (11;101) in dem topfförmigen Behälter (17;102) vorgesehen ist.

13. Rohrförmiges Element nach Anspruch 12, **dadurch gekennzeichnet, dass** die Befestigungseinrichtung (16;108;113) an der Außenseite des rohrförmigen Elements (11;101) und/oder der Innenseite des topfförmigen Behälters (17;102) angebrachte Rippen aufweist.

14. Rohrförmiges Element nach Anspruch 12 oder 13, **dadurch gekennzeichnet, dass** die Befestigungseinrichtung einen an dem topfförmigen Behälter zu fixierenden Deckel aufweist, der mit einer Durchgangsund/oder Befestigungseinrichtung für das rohrförmige Element versehen ist.

15. Rohrförmiges Element nach einem der Ansprüche 7-14, **dadurch gekennzeichnet, dass** das rohrförmige Element (11;101) mit einem Verschlussteil (14;102) an seinem unteren Ende versehen ist.

16. Rohrförmiges Element nach einem der Ansprüche 7-15, **dadurch gekennzeichnet, dass** Entwässerungsöffnungen (15;114) in dem oder angrenzend an das untere Ende des rohrförmigen Elements (11;101) vorgesehen sind.

17. Rohrförmiges Element nach einem der Ansprüche 7-16, **dadurch gekennzeichnet, dass** die Außenseite des rohrförmigen Elements (11) mit einer Stabilisiereinrichtung (16) versehen ist.

18. Rohrförmiges Element nach Anspruch 17, **dadurch gekennzeichnet, dass** die Stabilisiereinrichtung (16) eine einen Fuß bildende Einrichtung aufweist.

19. Rohrförmiges Element nach Anspruch 18, **dadurch gekennzeichnet, dass** sich die einen Fuß bildende Einrichtung (16) über das untere Ende des rohrförmigen Elements (11) hinaus erstreckt.

20. Rohrförmiges Element nach einem der Ansprüche 7-19, **dadurch gekennzeichnet, dass** das rohrförmige Element (11;51;101) eine konische Konfiguration aufweist, die von oben nach unten divergiert.

21. Rohrförmiges Element nach Anspruch 7, **dadurch gekennzeichnet, dass** ein von oben nach unten divergierendes konisches Rohrteil (101) und ein deckelförmiges Unterteil (102) vorgesehen sind, wobei das Rohrteil in seinem unteren Bereich mit einer Anzahl von am Umfang verteilten Rippen (109) versehen ist, die im wesentlichen vertikal verlaufen und über den unteren Rand des Rohrteils vorstehen, und am unteren Rand mit einer Anzahl von am Umfang verteilten Flanschteilen (108) versehen ist, die im wesentlichen horizontal verlaufen und von der Außenfläche des Rohrs nach außen vorstehen, und wobei das Unterteil ein plattenförmiges Teil (111) und einen umlaufenden Rand (112) aufweist, der von diesem Teil nach oben verläuft, wobei der umlaufende Rand der freie obere Rand dieses Teils ist, der mit einer Anzahl von am Umfang verteilten Vorsprüngen (113) versehen ist, die im wesentlichen horizontal verlaufen und von der Innenfläche des umlaufenden Rands nach innen vorstehen, wobei die Anordnung derart ausgeführt ist, dass das Unterteil (102) durch Zusammenwirken der Flanschteile (108) und der Vorsprünge (113) an dem Rohrteil (101) festgeklemmt werden kann, wobei die Rippen (109) an dem plattenförmigen Teil (111) anliegen, so dass, wenn das Unterteil an das Rohrteil angeklemmt ist, ein offener Spalt zwischen Rohrteil und Unterteil verbleibt.

22. Rohrförmiges Element nach Anspruch 21, **dadurch gekennzeichnet, dass** eine Anzahl von am Umfang verteilten Öffnungen (114) in dem Unterteil (102) am Übergang zwischen dem plattenförmigen Teil (111) und dem umlaufenden Rand (112) vorgesehen ist,

23. Rohrförmiges Element nach Anspruch 22, **dadurch gekennzeichnet, dass** die Öffnungen (114) unterhalb der Vorsprünge (113) vorgesehen sind.

24. Rohrförmiges Element nach Anspruch 21, **dadurch gekennzeichnet, dass** die Flanschteile (108) mit einem fixierenden Randteil (108a), einem Klemmteil (108b) und einem Anschlagteil (108c) versehen sind.

25. Rohrförmiges Element nach Anspruch 21, **dadurch gekennzeichnet, dass** das Rohrteil (101) in seinem oberen Bereich mit einer Ventileinrichtung (105) versehen ist, die Teil des Rohrteils ist und relativ zu dessen umlaufender Wand schwenkbar nach innen oder außen gedrückt werden kann.

26. Rohrförmiges Element nach Anspruch 21, **dadurch gekennzeichnet, dass** das Rohrteil (101) innen in seinem oberen Bereich mit einer Anzahl von am Umfang verteilten Rippen (104) versehen ist, die im wesentlichen radial und vertikal verlaufen und derart dimensioniert sind, dass, wenn eine Anzahl von rohrförmigen Elementen genestet ist, der obere Rand (103) eines darunter liegenden rohrförmigen Elements gegen die Unterseiten der Rippen eines darüber liegenden rohrförmigen Elements stößt, bevor die rohrförmigen Elemente klemmend ineinander verkeilt werden können.

27. Rohrförmiges Element nach Anspruch 26, **dadurch gekennzeichnet, dass** die Außenseite des Rohrteils (101) mit einer Handgriffeinrichtung (110) versehen ist.

## Revendications

1. Procédé pour cultiver des plantes à fleurs et à feuilles dont les tiges et les branches croissent généralement en direction verticale, où une pluralité de parties de plantes (8), comme au moins un greffon et une pluralité de pousses, sont courbées latéralement comme un tout, de sorte que, adjacentes à l'endroit de ployage, naissent d'autres pousses (9) qui forment les produits à cultiver, en particulier des fleurs coupées (10), qui, après avoir atteint une longueur et un développement souhaités, sont coupées,
**caractérisé en ce que** chaque plante est disposée dans un élément tubulaire séparé (1 ; 11; 21 ; 31 ; 41 ; 51 ; 61 ; 71 ; 81 ; 91 ; 101) qui est, sur la plus grande partie de sa longueur, entouré par un espace libre et rempli de terreau de culture (7) ou de substrat de culture, tel que, entre autres, des granulés de lave ou une substance de noix de coco, chaque élément tubulaire étant espacé d'autres éléments tubulaires et construit avec un rapport longueur/diamètre tel que les parties de plantes (8) ployées sont courbées vers le bas d'un angle supérieur à 90° par rapport à un plan horizontal et font saillie, sur la plus grande partie de leurs longueurs, au-delà et sous au moins la partie supérieure de la paroi périphérique de l'élément tubulaire dans l'espace libre l'entourant.

2. Procédé selon la revendication 1,
**caractérisé en ce que** les parties de plantes ployées (8) sont courbées dans une position relativement à forte pente à verticale, c'est-à-dire un angle de ployage de 135° ou plus.

3. Procédé selon la revendication 1 ou 2,
**caractérisé en ce qu'**une pluralité d'éléments tubulaires (1 ; 11; 21 ; 31 ; 41 ; 51 ; 61 ; 71 ; 81 ; 91 ; 101) sont espacés de sorte que les parties de plantes ployées (8) d'une plante touchent à peine, ou pas du tout, les parties d'une autre plante.

4. Procédé selon l'une quelconque des revendications précédentes,
**caractérisé en ce que** chaque élément tubulaire (1 ; 11; 21 ; 31 ; 41 ; 51 ; 61 ; 71 ; 81 ; 91 ; 101) présente sa face de fond munie d'une fermeture (2 ; 14 ; 32 ; 93 ; 102) et **en ce que**, dans ou adjacentes à ladite fermeture, des ouvertures de drainage (4, 5 ; 15 ; 26 ; 74 ; 114) sont prévues, avec une pluralité de tels éléments tubulaires disposés au-dessus d'une gouttière d'évacuation d'eau (83, 84 ; 94).

5. Procédé selon l'une quelconque des revendications précédentes,
**caractérisé en ce que** chaque élément tubulaire (1 ; 11; 21 ; 31 ; 41 ; 51 ; 61 ; 71 ; 81 ; 91 ; 101) est muni de moyens de pied (16 ; 63 ; 73 ; 82 ; 92) et **en ce qu'**une pluralité de tels éléments tubulaires sont disposés sur une gouttière d'évacuation (83, 84 ; 94) de façon à y être supportés.

6. Procédé selon l'une quelconque des revendications 1 - 4,
**caractérisé en ce qu'**une pluralité d'éléments tubulaires (31) sont suspendus au-dessus d'une gouttière d'évacuation (34).

7. Elément tubulaire à utiliser dans un procédé pour cultiver des plantes à fleurs et à feuilles selon l'une quelconque des revendications précédentes,
**caractérisé en ce que** l'élément tubulaire (11 ; 51 ; 101) présente une forme divergente avec une extrémité inférieure et une extrémité supérieure, l'extrémité inférieure ayant une section transversale plus grande que l'extrémité supérieure, tandis que la longueur de l'élément tubulaire est au moins deux fois la dimension transversale de l'élément tubulaire adjacent à son extrémité supérieure, ou la dimension transversale la plus faible si l'élément tubulaire a une section transversale allongée.

8. Elément tubulaire selon la revendication 7,
**caractérisé en ce qu'**il présente une section transversale circulaire au moins dans sa zone supérieure.

9. Elément tubulaire selon la revendication 7 ou 8,
**caractérisé en ce que**, dans la zone d'extrémité supérieure de la paroi latérale, un ou une pluralité de trous d'aération de terreau et d'irrigation (53 ; 105) sont prévus.

10. Elément tubulaire selon l'une quelconque des revendications 7 - 9,
**caractérisé en ce que** son bord supérieur (13 ; 52 ; 103) est d'une conception arrondie ou à rebord.

11. Elément tubulaire selon l'une quelconque des revendications 7 - 10,
**caractérisé en ce que** l'élément tubulaire (11 ; 101) s'étend sur une partie de sa longueur dans un conteneur en forme de pot (17 ; 102) rempli de terreau de culture ou d'un autre substrat nutritif.

12. Elément tubulaire selon la revendication 11,
**caractérisé en ce que** des moyens (16 ; 108, 113) sont présents pour fixer l'élément tubulaire (11 ; 101) dans le conteneur en forme de pot (17; 102).

13. Elément tubulaire selon la revendication 12,
**caractérisé en ce que** les moyens de fixation (16 ; 108, 113) consistent en des nervures fixées à l'extérieur de l'élément tubulaire (11 ; 101) et/ou à l'intérieur du conteneur en forme de pot (17 ; 102).

14. Elément tubulaire selon la revendication 12 ou 13,
**caractérisé en ce que** les moyens de fixation consistent en un couvercle à fixer sur le conteneur en forme de pot, ledit couvercle étant muni de moyens de passage et/ou de fixation pour l'élément tubulaire.

15. Elément tubulaire selon l'une quelconque des revendications 7 - 14,
**caractérisé en ce que** l'élément tubulaire (11 ; 101) est muni d'une fermeture (14 ; 102) au niveau de son extrémité inférieure.

16. Elément tubulaire selon l'une quelconque des revendications 7 - 15,
**caractérisé en ce que** des ouvertures de drainage (15 ; 114) sont prévues dans ou de façon adjacente à l'extrémité inférieure de l'élément tubulaire (11 ; 101).

17. Elément tubulaire selon l'une quelconque des revendications 7 - 16,
**caractérisé en ce que** l'extérieur de l'élément tubulaire (11) est muni de moyens de stabilisation (16).

18. Elément tubulaire selon la revendication 17,
**caractérisé en ce que** les moyens de stabilisation (16) comprennent des moyens formant un pied.

19. Elément tubulaire selon la revendication 18,
**caractérisé en ce que** les moyens (16) formant un pied s'étendent au-delà de l'extrémité inférieure de l'élément tubulaire (11).

20. Elément tubulaire selon l'une quelconque des revendications 7 - 19,
**caractérisé en ce que** l'élément tubulaire (11 ; 51 ; 101) est d'une conception conique, divergeant du haut vers le bas.

21. Elément tubulaire selon la revendication 7,
**caractérisé en ce qu'**une partie de tube conique (101) est prévue, en divergeant du haut vers le bas, et une partie de fond conformée en couvercle (102), où la partie de tube est pourvue, dans sa zone inférieure, d'une pluralité de nervures réparties périphériquement (109) s'étendant sensiblement verticalement et faisant saillie au-delà du bord inférieur de la partie de tube, et, au niveau de son bord inférieur, d'une pluralité de parties de rebord réparties périphériquement (108) s'étendant sensiblement horizontalement et faisant saillie vers l'extérieur de la surface externe de la partie de tube, et dans lequel la partie de fond comprend une partie conformée en plaque (111) et un bord périphérique (112) s'étendant vers le haut à partir de cette partie, lequel bord périphérique est son bord supérieur libre muni d'une pluralité de saillies réparties périphériquement (113) s'étendant sensiblement horizontalement et faisant saillie vers l'intérieur à partir de la surface interne du bord périphérique, l'agencement étant tel que la partie de fond (102) peut être serrée fixement sur la partie de tube (101) par la coopération des parties de rebord (108) et des saillies (113), avec les nervures (109) reposant contre la partie conformée en plaque (111), de sorte que, quand la partie de fond est serrée sur la partie de tube, un jeu ouvert reste entre la partie de tube et la partie de fond.

22. Elément tubulaire selon la revendication 21,
**caractérisé en ce qu'**une pluralité d'ouvertures réparties périphériquement (114) sont prévues dans la partie de fond (102), au niveau de la transition entre la partie conformée en plaque (111) et le bord périphérique (112).

23. Elément tubulaire selon la revendication 22,
**caractérisé en ce que** les ouvertures (114) sont prévues sous les saillies (113).

24. Elément tubulaire selon la revendication 21,
**caractérisé en ce que** les parties de rebord (108) sont munies d'une partie de bord de mise en place (108a), d'une partie de serrage (108b) et d'une partie d'arrêt (108c).

25. Elément tubulaire selon la revendication 21,
**caractérisé en ce que** la partie de tube (101) est munie, dans sa zone supérieure, de moyens de valve (105) qui forment partie de la partie de tube et peuvent être pressés, de façon pivotante, vers l'intérieur ou vers l'extérieur par rapport à la paroi périphérique de celle-ci

26. Elément tubulaire selon la revendication 21,
**caractérisé en ce que** la partie de tube (101) est munie intérieurement, dans sa zone supérieure, d'une pluralité de nervures réparties périphériquement (104) qui s'étendent sensiblement radialement et verticalement et qui sont dimensionnées de sorte que, quand une pluralité d'éléments tubulaires sont emboîtés, le bord supérieur (103) d'un élément tubulaire sous-jacent bute contre les faces de fond des nervures d'un élément tubulaire sus-jacent, avant que les éléments tubulaires puissent se coincer, de façon serrée, les uns dans les autres.

27. Elément tubulaire selon la revendication 26,
**caractérisé en ce que** la partie de tube (101) a son extérieur muni de moyens de préhension (110).
